# EUROPÄISCHE PATENTSCHRIFT

(11) **EP 0 979 136 B1**
(45) Veröffentlichungstag und Bekanntmachung des Hinweises auf die Patenterteilung: **04.06.2003**
(21) Anmeldenummer: 98917016.2
(22) Anmeldetag: 19.03.1998
(51) Int. Cl.: B01D 53/50, B01D 53/56, B01D 53/68

(54) **VERFAHREN ZUR ENTFERNUNG VON SAUREN SCHADSTOFFEN AUS ABGASEN**
METHOD FOR REMOVING HARMFUL ACID SUBSTANCES FROM WASTE GASES
PROCEDE D'ELIMINATION DE SUBSTANCES NOCIVES ACIDES CONTENUES DANS DES EFFLUENTS GAZEUX

(30) Priorität: 19.03.1997 DE 19711529
(43) Veröffentlichungstag der Anmeldung: 16.02.2000
(73) Patentinhaber: Schneider, Wolfgang, 44649 Herne (DE)
(72) Erfinder: BACH, Hans, Friedrich, D-82049 Pullach (DE); KREIMES, Horst, D-83352 Altenmarkt (DE)
(74) Vertreter: HOFFMANN - EITLE
(86) Internationale Anmeldenummer: EP9801613
(87) Internationale Veröffentlichungsnummer: WO98041309

(56) Entgegenhaltungen:
- EP-A- 0 203 430
- EP-A- 0 328 874
- EP-A- 0 587 426
- WO-A-87/03214
- WO-A-96/20038
- DE-A- 3 904 500

## Beschreibung

Die vorliegende Erfindung betrifft ein zweistufiges Verfahren zur Entfernung von sauren Schadstoffen aus Abgasen von Feuerungsanlagen und Schmelzprozessen mit Hilfe von Trockenadditiven.

Insbesondere Verbrennungsvorgänge in kohlebefeuerten Kraftwerkskesseln, Reststoff-Verbrennungsanlagen oder Schmelzprozessen generieren im allgemeinen Abgase, die als saure, gasförmige Komponenten SO₂/SO₃, HCL, HF, NO / NO₂ oder Mischungen davon enthalten können.

Hand-in-Hand mit den Verschärfungen durch die Umweltgesetzgebung der letzten Jahre erfolgte auch eine deutlich beschleunigte Entwicklung bei Abgasreinigungsverfahren vor allem in der Großindustrie. So werden für die Entfernung saurer Schadstoffe aus Verbrennungsabgasen als Stand der Technik u. a. die sogenannten Trockenadditiv- und Trockensorptionsverfahren angesehen.

Beim herkömmlichen Trockenadditiv-Verfahren werden zur Verminderung des Gehalts an sauren, gasförmigen Schadstoffen regelmäßig Erdalkalioxide eingesetzt, die bei Temperaturen zwischen 800 und 1250°C entweder direkt als Oxide verwendet werden oder die in der Feuerungsflamme aus Carbonaten oder Hydroxiden gebildet werden. Ein derartiges Verfahren wird in der DE-OS 39 04 500 zur Entfernung von Schwefeloxiden aus Abgasen beschrieben, wobei als Additiv ein Gemisch aus 80 bis 95 Gew.-% an feinteiligem Calciumcarbonat und 5 bis 20 Gew.-% an feinteiligem Kohlenstoff, vorzugsweise in Graphitform, mit bevorzugten Teilchengrößen < 100 µm eingesetzt wird. Das Additiv, dessen Calciumcarbonat-Anteil bezogen auf den SO₂-Gehalt im Abgas in zwei- bis fünffacher stöchiometrischer Menge eingesetzt wird, wird bei 800 bis 1 250 °C in die Abgaszone eingeblasen und verweilt dort bis zu maximal 5 Sekunden. Auf diese Weise lassen sich Entschwefelungsraten von bis zu 80 % erreichen.

Gegenüber Rauchgasentschwefelungsanlagen, die nach dem Nassverfahren arbeiten, sind die Vorteile des Trockenadditiv-Verfahrens in den vergleichsweise niedrigen Investitionskosten, der vorteilhaften Abscheidung der beladenen Adsorbentien mit den schon vorhandenen Staubabscheidern und der Entsorgung der verbrauchten Additive gemeinsam mit der Brennstoffasche zu sehen, wobei die potentielle Abbindefahigkeit des noch unreagierten Additivanteils an der Asche deren Deponiefahigkeit wegen einer deutlich verminderten Auslaugung der Asche erheblich verbessert. Berücksichtigt werden muß ebenfalls, daß die Trockenadditiv-Module wegen ihres minimalen Platzbedarfs leicht in bestehende Anlagen integriert werden können.

Trotz dieser zahlreichen Vorteile haben sich bei diesem Verfahren in der Praxis die relativ geringen Abscheidegrade von nur 40 bis 50 % und die sehr schlechte Additivausnutzung , die in der Regel unter 30 % liegt, weshalb mehr als zwei Drittel des Additivs unreagiert zusammen mit der Flugasche die jeweilige Anlage verlassen, als äußerst ungünstig erwiesen.

Beim alternativen Reinigungsprozess, dem Trockensorptions-Verfahren, werden überwiegend Erdalkalioxide oder -hydroxide bei Temperaturen zwischen 60 und 300 °C in den zu reinigenden Abgasstrom eingeblasen oder aber als Suspension ("Quasitrockenverfahren") eingesprüht. Im Gegensatz zum oben genannten Trockenadditiv-Verfahren ist diese Abscheidungsmethode mit einer Kapillarkondensation verknüpft. Mit diesem Verfahren können in Abhängigkeit vom Wasserdampf-Partialdruck, dem Rohgasgehalt und/oder der Verweilzeit im genannten Temperaturfenster SO₂-Abscheidegrade von bis zu ca. 70 % erreicht werden. Zum Erreichen der für dieses Verfahren optimalen Reinigungsgrade ist aber auch hier eine deutlich überstöchiometrische Additivdosierung unabdingbar.

Bei bspw. zweifacher Stöchiometrie in der Trockenadditivstufe heißt das, daß für einen Abscheidegrad von 40 % lediglich 20 % des eingesetzten Additivs für die eigentlichen Schadstoffbindungen genutzt werden, während 80 % calciniert und ungenutzt über die Flugasche und damit kostenintensiv entsorgt werden müssen, falls keine weitere Sorptionsstufe nachgeschaltet ist.

Wird dieses aktivierte calcinierte Additiv jedoch in eine Trockensorptionsstufe eingeleitet, bindet es ab Temperaturen unter ca. 190 °C weiteres Schadgase ein. Dennoch treten beim Trockensorptions-Verfahren im Alltagsbetrieb zusätzliche gravierende Probleme auf: So bilden sich schwer entfernbare Ablagerungen aus Additiv und Flugasche, die ab einem bestimmten Umfang unweigerlich Anlagenabschaltungen bedingen.

Als technische Abwehrmaßnahme hat sich hierfür der Einsatz eines speziellen Reaktors bewährt, wie er im Patent EP 0 203 430 beschrieben ist und der als Trockensorptionsreaktor direkt im Rauchgasweg plaziert wird, wo er auch den Kontakt zwischen Additiv und Rohgas intensivieren soll. Dieser Reaktortyp besteht im wesentlichen aus einem vertikal ausgerichteten, zylindrischen Behälter und weist im Inneren sich gegenüber dem Reaktorbehälter bewegende Einbauten, insbesondere in Form einer durchgehenden Schnecke, auf, die von einer in Behälterlängsachse ausgerichteten drehbaren Welle angetrieben werden. An der Innenwand des Reaktorbehälters sind vorzugsweise feste und im wesentlichen senkrecht zur Achse der Welle angeordnete Einbauten wie Siebböden oder Rohre angeordnet. Bevorzugte Reaktorvarianten sehen als Einbauten einzelne, eine unterbrochene Schnecke bildende, axial zwischen den festen Einbauten angeordnete Blechflügel vor bzw. als Wischer füngierende Einheiten aus den bewegbaren und den festen Einbauten. Die festen Einbauten können aber auch als Hohlkörper ausgebildet sein, durch deren Öffnungen Druckluft in das Reaktorinnere geblasen werden kann. Mit diesem Reaktortyp ist es gelungen, die in der Trockensorptionsstufe auftretenden Ab- und/oder Anlagerungen vollständig zu verhindern.

Aus den geschilderten Nachteilen des Standes der Technik heraus hat sich für die vorliegende Erfindung somit die Aufgabe gestellt, ein Verfahren zur Entfernung von sauren Schadstoffen aus Abgasen von Feuerungsanlagen und Schmelzprozessen in zwei Stufen zu entwickeln, das vor allem den teuren und wenig effektiven überstöchiometrischen Einsatz der Additive verbessert und den Kontakt von Additivpartikeln und den zu reinigenden Abgasen intensiviert.

Erfindungsgemäß gelöst wurde diese Aufgabe dadurch, daß man in einer ersten Stufe a) zunächst dem Abgas innerhalb der Anlage bei Temperaturen von 800 bis 1250 °C ein feinteiliges Additiv bestehend aus Calciumcarbonat oder Calciumhydroxid zugibt, und man in einer zweiten Stufe b) das vorgereinigte Abgas ggf. nach Zugabe von Wasser oder Wasserdamp in einem nachgeschalteten selbstreinigenden Reaktor ,der sich gegenüber dem Reaktorbehälter bewegende und dadurch ablagerungs verhindernde Einbauten aufweist, durch intensives Mischen bei Temperaturen von 60 bis 300°C nachbehandelt. Entgegen allen Erwartungen und somit völlig überraschend hat sich dabei gezeigt, daß durch die weitgehende Kombination der Verfahrensprinzipien des Trockenadditiv- mit dem Trockensorptionsverfahren sowie unter Einbeziehung eines Reaktors zum Intensivmischen des vorgereinigten Rohgases die bislang beiden Einzelverfahren als nachteilig angerechneten weit überstöchiometrischen Additiwerbräuche bei dennoch unzureichender Reinigungsleistung in einem Ausmaß verringert werden, das so nicht zu erwarten war.

Als bevorzugten Einsatzstoff sieht die vorliegende Erfindung ein feinteiliges Additiv vor, das aus 80 bis 95 Gew-% gefälltem Calciumcarbonat und 5 bis 20 Gew-% Kohlenstoff besteht, wobei der Kohlenstoff insbesondere in Graphitform vorliegen soll. Möglich sind neben diesen Hauptkomponenten auch mengenmäßig geringe Anteile an organisch gebundenem Stickstoff, die dann aber maximal 5 Gew-% des gesamten Additivs betragen sollten. Die Gehalte an organischen Stickstoff in NCN-Form dienen vorrangig Denox-Vorgängen und erweitern so das Einsatzspektrum des vorliegenden Verfahrens. Aufgrund der weitgehenden Übereinstimmung des Temperaturfensters von Trockenadditiv- und SNCR (Selective Non-Catalytic Reduction)-Verfahren wirken diese Stickstoffanteile Stickoxid-mindernd. Das Partikelspektrum des Additivs weist erfindungsgemäß zu über 90 % eine Teilchengröße von < 70 µm auf.

Wie bereits festgestellt, reichen beim vorliegenden Verfallren in der Regel stöchiometrische Additivmengen völlig aus, um befriedigende Reinigungsergebnisse zu erzielen. Für spezielle Anwendungsfälle sieht die Erfindung aber auch die Zugabe der maximal 5-fachen Additivmenge bezogen auf die stöchiometrische Menge an sauren Schadstoffen im Abgas, wie bspw. Schwefel-oder Stickstoffoxide, vor, wobei der 2- bis 4-fache Überschuß zu bevorzugen ist.

Die Additive werden in speziellen Verfahrensvarianten in der Stufe a) mit Hilfe von einer oder auch mehreren Düsen eingeblasen, wobei sich die Verwendung von Zweistoffdüsen als besonders vorteilhaft erwiesen hat. Die Stelle des Einblasens ist dabei nicht limitierend und kann demzufolge wahlweise in einer, aber auch in mehreren Ebenen erfolgen.

Für das Erreichen einer optimalen Reinigungsleistung von über 80 % haben sich für die erste Verfahrensstufe a) Temperaturen in der Anlage von 850°C bis 1 100 °C als besonders geeignet erwiesen und für die Nachreinigung entsprechend Stufe b) Temperaturen von 100 bis 200 °C, wobei erfindungsgemäß in einer bevorzugten Verfahrensvariante dem vorgereinigten Abgas unmittelbar nach Stufe a) Wasser oder Wasserdampf in einer solchen Menge zudosiert wird, daß das freie Calciumoxid im Abgas in Calciumhydroxid umgewandelt wird, was möglichst vollständig erfolgen sollte.

Beim vorliegenden Verfahrensprinzip handelt es sich im wesentlichen um die Kombination des Trockenadditiv- mit dem Trockensorptions-Verfahren unter Einbeziehung eines sich selbstreinigenden Reaktors mit vorzugsweise beweglichen Einbauten, der für eine intensive Durchmischung des in der Stufe a) vorgereinigten Abgases mit dem ggf. zugegebenen Wasser(-dampf) in Verfahrensstufe b) sorgt (s. Bsp. 1.3 bzw. 2.3). Insgesamt werden durch die erfindungsgemäße Verfahrenskombination die Nachteile der Einzelverfahren bei gleicher Additiv-Dosiermenge beträchtlich gemindert. Entscheidend dabei ist vor allem, daß der Gesamt-Abscheidegrad der Verfahrenskombination mit bis zu 90 % deutlich über den Abscheidegraden der Einzelverfahren von 40 bis 50 % bzw. bis zu 70 % liegt.

Hervorzuheben ist außerdem, daß mit dem vorliegenden Verfahren die sonst so gefürchteten Additiv-/ Flugasche-Ablagerungen in den Feuerungsanlagen selbst dann zuverlässig vermieden werden, wenn bspw. im vorgeschalteten Feuerungskessel durch Calciniervorgänge aktivierte und somit besonderes zu Anbackungen neigende Additivspezies entstehen und/oder vor deren Eintritt in den eigentlichen Trockensorptionsreaktor eine Befeuchtung der Abgase stattfindet.

Die Zusammensetzung des bevorzugten erfindungsgemäßen Additivs aus Calciumcarbonat und Kohlenstoff und eventuell geringen Anteilen an organisch gebundenem Stickstoff entspricht im wesentlichen speziellen Kalken, die durch Fällungsreaktionen hergestellt werden. Feinste Graphitpartikel dienen dabei als Kristallisationskeime, die später gemeinsam mit der sie umgebenden Calciumcarbonathülle im Feuerungsraum zur Mikrodispergierung der Additivpartikel beitragen. Die nur wenige µm großen Bruchstücke weisen ein hohes Oberflächen-/Volumenverhältnis auf und sind zudem lokal sehr fein im Abgas verteilt, was die Diffusionswege der Schadstoff-Moleküle an die Additivpartikel extrem verkürzt.

Demgegenüber kann ein zu entsprechend feinen Partikeln vermahlener Branntkalk oder Kalkstein eine derartige hohe Abscheidewirkung niemals erreichen, da dessen feinteilige Partikel im Gegensatz zum erfingungsgemäß bevorzugt verwendeten Additiv bei Umgebungsbedingungen zu Agglomerationsvorgängen neigen, weshalb auch mit natürlichem Kalkstein Abscheidegrade von nur 80 bis bestenfalls 85 % erreicht werden können, aber niemals bis 90 %, wie mit dem oben beschriebenen und vorzugsweise eingesetzten Additiv. Der um ca. 10 % höhere Wirkungsgrad ist allein schon deshalb bedeutsam, da eine zusätzlich notwendige Schadstoffentfernung auf niedrigem Konzentrationsniveau - falls überhaupt - nur mit überproportional hohen Additiveinsätzen bewirkt werden kann.

Wichtig für das vorliegende Verfahren ist aber auch die bereits angesprochene intensive Durclunischung in der Verfahrensstufe b), wofür sich ein selbstreinigender Reaktor mit statischen oder beweglichen Mischelementen als besonders geeignet erwiesen hat. In speziellen Fällen können selbstverständlich auch mehrere Reaktoren in Serie oder parallel geschaltet werden. Bei diesem Reaktortyp handelt es sich um einen typischen Reaktor, wie er aus dem Stand der Technik bekannt ist und dementsprechend auch gewürdigt worden ist: Es weist also insbesondere sich gegenüber dem Reaktorbehälter bewegende, meist schneckenförmige und von einer drehbaren Welle angetriebene Einbauten auf. Die gesamte Reaktorkonstruktion ist in vertikaler Richtung ausgelegt und garantiert so in Stufe b) des vorliegenden Verfahrens durch das Zusammenwirken der beweglichen mit den festen Reaktoreinbauten einerseits ein intensives Durchmischen der in Stufe a) vorgereinigten Abgase; andererseits werden aber auch durch den Selbstreinigungseffekt der Einbauten etwaige Ablagerungen nachhaltig verhindert, was einen weitgehend kontinuierlichen Betrieb der Abgasreinigungsanlage ermöglicht.

Die Erfindung sieht zur Vervollständigung des Verfahrens ebenfalls vor, nach der Nachbehandlung entsprechend Stufe b) die Abgase zusätzlich zu entstauben, was zweckmäßig entsprechend dem Stand der Technik z. B. mit einem Tiefenfilter erfolgen kann.

Im nachfolgenden Vergleich verdeutlichen die Beispiele die Vorteile des erfindungsgemäßen Verfahrens gegenüber den bekannten Einzelverfahren:

### Beispiele

Für alle nachstehend aufgeführten Beispiele gilt:
- Verbrennung von 5.000 kg Braunkohle/h mit 1,28 Gew.-% Schwefelanteil.
- Produzierte Schwefeldioxid-Menge: ca. 64 kg/h entsprechend 1 kmol SO₂/h.

### Beispiel 1: Entfernung saurer Schadgase aus Abgasen einer Braunkohlefeuerung mit Calciumcarbonat (Beispiel 1.1) bzw. calciumhydroxid (Beispiel 1.2)

### Vergleichsbeispiel:

*1.1* Trockenadditiv-Verfahren
   (Direktentschwefelung im Feuerungsbereich)
   Zugedüste Additivmenge (Calciumcarbonat): 200 kg/h entsprechend
      2 kmol Ca/h.
      Mittlere Temperatur in Eindüseebene: ca. 1 040 °C
      Molstromverhältnis von Ca zu SO₂= 2 bei Additivzugabe.
   Mit diesem Molstromverhältnis erreichbarer Wirkungsgrad: 40 %
   Molenstrom Ca am Kesselaustritt: 1,6 kmol Ca/h
      Molenstrom SO₂ am Kesselaustritt: 0,6 kmol SO₂/h
   Molstromverhältnis von Ca zu SO₂= 2,667 am Kesselaustritt.

### Vergleichsbeispiel:

1.2 Trockensorptions-Verfahren
   (Entschwefelung der Abgase nach Austritt aus dem Kessel)
   Zugedüste Additivmenge (Calciumhydroxid): 197,3 kg/h entsprechend 2,667 kmol Ca/h.
      Temperatur an Eindüsestelle: ca. 180 °C
      Molstromverhältnis von Ca zu SO₂= 2,667 bei Additivzugabe.
   Mit diesem Molstromverhältnis erreichbarer Wirkungsgrad: 70 %
   Molenstrom SO₂ am Austritt aus der Trockensorption: 0,3 kmol SO₂/h

### Erfindungsbeispiel:

1.3 2-stufiges Verfahren mit Grobreinigung gemäß 1.1 als Stufe a) und Feinreinigung gemäß 1 .2 als Stufe b)
   Zugedüste Additivmenge (Calciumcarbonat): 200 kg/h entsprechend 2 kmol Ca/h.
      Mittlere Temperatur in Eindüseebene: ca. 1 050 °C
      Temperatur von Eintritt in den Trockensorptionsreaktor: 183 °C
      Molstromverhältnis von Ca zu SO₂= 2 bei Additivzugabe.
   Mit diesem Molstromverhältnis erreichbarer Wirkungsgrad der Stufe a): 40%
   Molenstrom Ca am Austritt der ersten Stufe: 1,6 kmol Ca/h
      Molenstrom SO₂ am Austritt der ersten Stufe: 0,6 kmol SO₂/h
      Molenstromverhältnis von Ca zu SO₂ = 2,667 am Austritt der Stufe a) und am Eintritt in die Stufe b).
   Mit diesem Molstromverhältnis erreichbarer Wirkungsgrad der Stufe b): 75 %
   Der Wirkungsgrad in der Stufe b) ist größer als der Wirkungsgrad der reinen Trockensorption gemäß 1.2, da das in der Stufe a) frisch entstandene Calciumoxid, welches sich mit dem im Abgas vorhandenen oder zusätzlich zugegebenen Wasserdampf zu frisch gelöschtem Calciumhydroxid umwandelt, eine höhere Reaktivität aufweist als gelagertes Calciumhydroxid (Synergieeffekt).
   Molenstrom SO₂ am Austritt der Stufe b): 0,15 kmol SO₂/h
   Gesamtwirkungsgrad= (SO₂ im Rohgas vor der Stufe a) abzüglich SO₂ im Reingas nach der Stufe b)) : (SO₂ im Rohgas vor der Stufe a))
   Gesamtwirkungsgrad = (1 kmol SO₂/h - 0,15 kmol SO₂/h) : 1 kmol SO₂/h

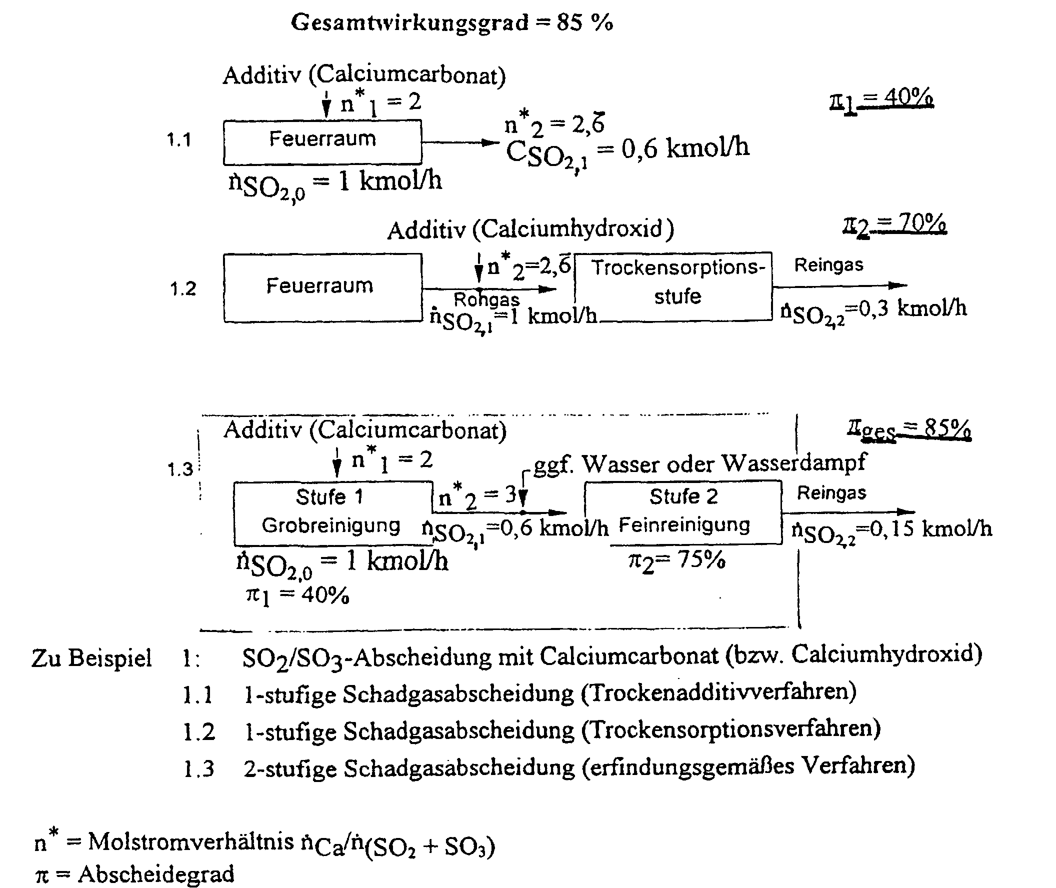

### Beispiel 2: Entfernung saurer Schadgase aus Abgasen einer Braunkohlefeuerung mit graphithaltigem Calciumcarbonat (Bsp 2. 1) bzw Calciumhydroxid (Bsp 2.2)

### Vergleichsbeispiel:

2.1 Trockenadditiv-Verfahren
   (Direktentschwefelung im Feuerungsbereich)
   Zugedüste Additivmenge (Calciumcarbonat mit 10 Gew.-% Graphitanteil):
      222 kg/h, davon 200 kg CaCO₃/h entsprechend 2 kmol Ca/h.
      Mittlere Temperatur in Eindüseebene: ca. 1 025 °C
      Molstromverhältnis von Ca zu SO₂= 2 bei Additivzugabe.
   Mit diesem Molstromverhältnis erreichbarer Wirkungsgrad: 50 %
   Molenstrom Ca am Kesselaustritt: 1,5 kmol Ca/h
      Molenstom SO₂ am Kesselaustritt: 0,5 kmol SO₂/h
   Molenstromverhältnis von Ca zu SO₂= 3,0 am Kesselaustritt.

### Vergleichsbeispiel:

2.2 Trockensorptions-Verfahren
   (Entschwefelung der Abgase nach Austritt aus dem Kessel)
   Zugedüste Additivmenge (Calciumhydroxid): 222 kg/h entspr. 3,0 kmol Ca/h.
      Temperatur an Eindüsestelle: ca. 175 °C
      Molenstromverhältnis von Ca zu SO₂= 3,0 bei Additivzugabe.
   Mit diesem Molstromverhältnis erreichbarer Wirkungsgrad: 75 %
   Molenstrom SO₂ am Austritt aus der Trockensorption: 0,25 kmol SO₂/h

### Erfindungsbeispiel:

2.3 Zweistufiges Verfahren mit Grobreinigung gemäß 2.1 als Stufe a) und Feinreinigung gemäß 2.2 als Stufe b)
   Zugedüste Additivmenge (Calciumcarbonat mit 10 Gew.-% Kohlenstoffanteil):
      222 kg/h, davon 200 kg CaCO₃/h entsprechend 2 kinol Ca/h.
      Mittlere Temperatur an Eindüsestelle: 1 030 °C
      Temperatur von Eintritt in den Trockensorptionsreaktor: 178 °C
      Molstromverhältnis von Ca zu SO₂ = 2 bei Additivzugabe.
   Mit diesem Molstromverhältnis erreichbarer Wirkungsgrad der Stufe a): 50%
   Molenstrom Ca am Austritt der Stufe a): 1,5 kmol Ca/h
      Molenstrom SO₂ am Austritt der Stufe b): 0,5 kmol SO₂/h
   Molenstromverhältnis von Ca zu SO₂= 3,0 am Austritt der Stufe a) und Eintritt in die Stufe b).
   Mit diesem Molstromverhältnis erreichbarer Wirkungsgrad der Stufe b): 80 %
   Wegen der erhöhten Reaktivität der in der ersten Stufe durch das explosionsartige Bersten der kohlenstoffhaltigen Calciumcarbonatpartikeln entstandenen Calciumoxidpartikeln, welche sich mit dem im Abgas vorhandenen oder zusätzlich zugegebenen Wasserdampf zu frisch gelöschten Calciumhydroxidpartikeln umwandeln, ist der Wirkungsgrad der Stufe b) höher als der Wirkungsgrad der reinen Trockensorption gemäß 2.2 (Synergieeffekt).
   Molenstrom SO₂ am Austritt der Stufe b): 0,10 kmol SO₂/h
   Gesamtwirkungsgrad = (SO₂ im Rohgas vor der Stufe a) abzüglich
      SO₂ im Reingas nach der Stufe b)): (SO₂ im Rohgas vor der Stufe a))
   Gesamtwirkungsgrad = (1 kmol SO₂/h - 0,10 kmol SO₂/h): kmol SO₂/h

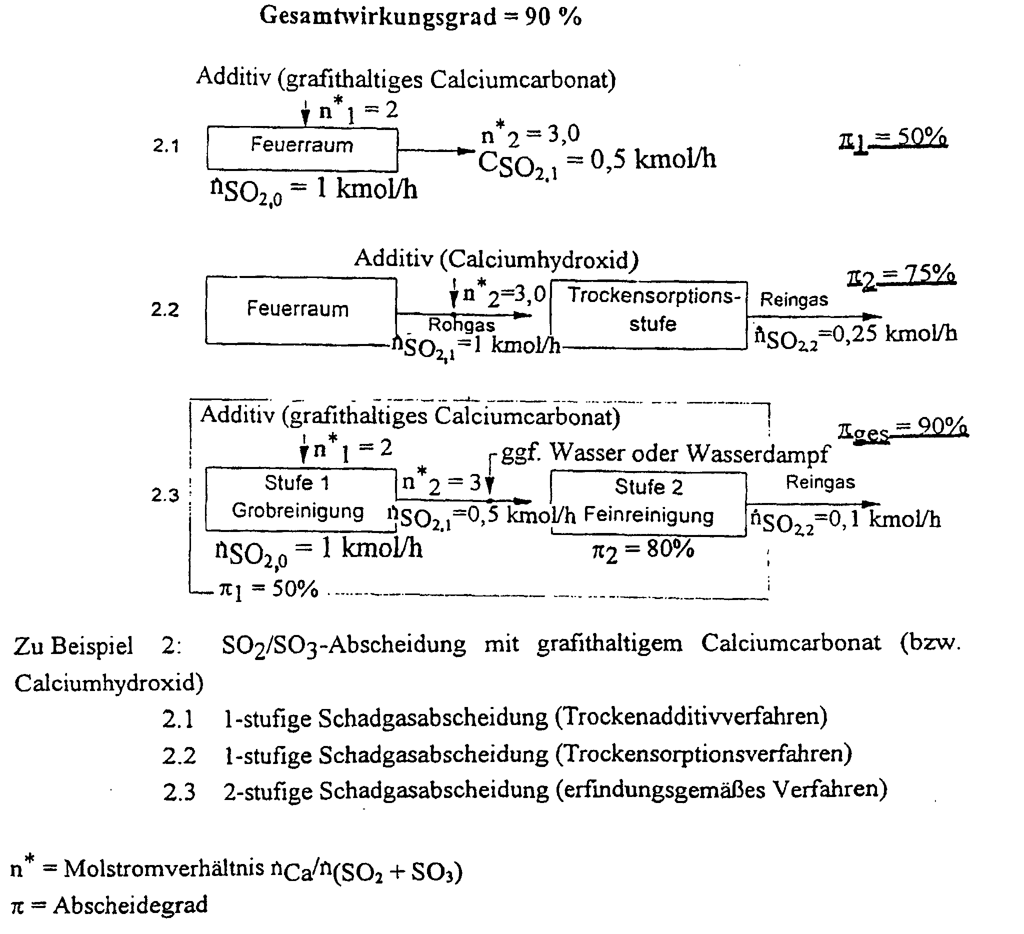

## Patentansprüche

1. Verfahren zur Entfernung von sauren Schadstoffen aus Abgasen von Feuerungsanlagen und Schmelzprozessen mit Hilfe von Trockenadditiven in zwei Stufen, **dadurch gekennzeichnet, dass** man
a) zunächst dem Abgas innerhalb der Anlage bei Temperaturen von 800 bis 1250 °C ein feinteiliges Additiv bestehend aus Calciumcarbonat oder Calciumhydroxid zugibt und
b) das vorgereinigte Abgas ggf. nach Zugabe von Wasser oder Wasserdampf in einem nachgeschalteten selbstreinigenden Reaktor, der sich gegenüber dem Reaktorbehälter bewegende und dadurch ablagerungsverhindernde Einbauten aufweist, durch intensives Mischen bei 60 bis 300 °C nachbehandelt.

2. Verfahren nach Anspruch 1, **dadurch gekennzeichnet, dass** man in Stufe a) ein feinteiliges Additiv aus 80 bis 95 Gew.-% gefälltem Calciumcarbonat und 5 bis 20 Gew.-% Kohlenstoff zugibt.

3. Verfahren nach Anspruch 2, **dadurch gekennzeichnet, dass** man ein Additiv verwendet, das bis zu 5 Gew.-% an organisch gebundenem Stickstoff enthält.

4. Verfahren nach Anspruch 2, **dadurch gekennzeichnet, dass** der Kohlenstoff in Form von Graphit vorliegt.

5. Verfahren nach den Ansprüchen 1 bis 4, **dadurch gekennzeichnet, dass** das Additiv eine Teilchengröße von > 90 % < 70 µm aufweist.

6. Verfahren nach den Ansprüchen 1 bis 5, **dadurch gekennzeichnet, dass** das Additiv in einer Menge von dem 1- bis 5-fachen der stöchiometrischen Menge an sauren Schadstoffen im Abgas eingesetzt wird.

7. Verfahren nach den Ansprüchen 1 bis 6, **dadurch gekennzeichnet, dass** das Additiv in der Stufe a) mit Hilfe von einer oder mehreren Düsen eingeblasen wird.

8. Verfahren nach Anspruch 7, **dadurch gekennzeichnet, dass** als Düsen Zweistoffdüsen verwendet werden.

9. Verfahren nach den Ansprüchen 1 bis 8, **dadurch gekennzeichnet, dass** die Temperatur in der Anlage in Stufe a) 850 bis 1100 °C beträgt.

10. Verfahren nach den Ansprüchen 1 bis 9, **dadurch gekennzeichnet, dass** dem vorgereinigten Abgas Wasser oder Wasserdampf in einer solchen Menge zudosiert wird, dass das freie Calciumoxid im Abgas in Calciumhydroxid umgewandelt wird.

11. Verfahren nach den Ansprüchen 1 bis 10, **dadurch gekennzeichnet, dass** die Nachreinigung entsprechend Stufe b) bei Temperaturen von 100 bis 200 °C durchgeführt wird.

12. Verfahren nach den Ansprüchen 1 bis 11, **dadurch gekennzeichnet, dass** die Stufe b) in einem Reaktor mit statischen oder beweglichen Mischelementen durchgeführt wird.

13. Verfahren nach den Ansprüchen 1 bis 12, **dadurch gekennzeichnet, dass** nach der Nachbehandlung entsprechend Stufe b) die Abgase noch entstaubt werden.

## Claims

1. Process for removing acid pollutants from waste gases of firing plants and melting processes with the aid of dry additives in two stages, **characterised in that**
a) first of all a finely divided additive consisting of calcium carbonate or calcium hydroxide is added to the waste gas within the plant at temperatures of 800 to 1,250°C and
b) the pre-purified waste gas is after-treated by intensive mixing at 60 to 300°C, optionally after addition of water or steam in a downstream self-cleaning reactor, which has baffles being moved with respect to the reactor container thus preventing deposition.

2. Process according to claim 1, **characterised in that** in stage a) a finely divided additive made from 80 to 95 wt.% precipitated calcium carbonate and 5 to 20 wt.% carbon is added.

3. Process according to claim 2, **characterised in that** an additive is used which contains up to 5 wt.% of organically bound nitrogen.

4. Process according to claim 2, **characterised in that** the carbon is present in the form of graphite.

5. Process according to claims 1 to 4, **characterised in that** the additive has a particle size of > 90 % < 70 µm.

6. Process according to claims 1 to 5, **characterised in that** the additive is used in a quantity of 1 to 5 times the stoichiometric quantity of acid pollutants in the waste gas.

7. Process according to claims 1 to 6, **characterised in that** the additive in stage a) is injected with the aid of one or more nozzles.

8. Process according to claim 7, **characterised in that** two-fluid nozzles are used as nozzles.

9. Process according to claims 1 to 8, **characterised in that** the temperature in the plant in stage a) is 850 to 1,100°C.

10. Process according to claims 1 to 9, **characterised in that** water or steam is metered into the pre-purified waste gas in such a quantity that the free calcium oxide in the waste gas is converted into calcium hydroxide.

11. Process according to claims 1 to 10, **characterised in that** the after-purification according to stage b) is carried out at temperatures from 100 to 200°C.

12. Process according to claims 1 to 11, **characterised in that** stage b) is carried out in a reactor with static or movable mixing elements.

13. Process according to claims 1 to 12, **characterised in that** following the aftertreatment according to stage b), the waste gases are also de-dusted.

## Revendications

1. Procédé pour éliminer des substances nocives acides dans des effluents gazeux d'installations de chauffe et d'opérations de fusion à l'aide d'additifs secs en deux étapes, **caractérisé en ce que**
a) l'on ajoute d'abord aux effluents gazeux à l'intérieur de l'installation, à des températures de 800 à 1 250 °C, un additif à particules fines composé de carbonate de calcium ou d'hydroxyde de calcium et
b) l'on retraite par mélange intensif à une température de 60 à 300 °C, après avoir éventuellement ajouté de l'eau ou de la vapeur d'eau, les effluents gazeux prépurifiés dans un réacteur autopurifiant monté en aval qui présente des éléments constitutifs incorporés qui sont mobiles par rapport au réservoir du réacteur et empêchent ainsi des dépôts.

2. Procédé selon la revendication 1 **caractérisé en ce que** l'on ajoute à l'étape a) un additif à particules fines composé de carbonate de calcium précipité en une quantité de 80 à 95 pour cent en poids et de carbone en une quantité de 5 à 20 pour cent en poids.

3. Procédé selon la revendication 2 **caractérisé en ce que** l'on utilise un additif qui contient jusqu'à 5 pour cent en poids d'azote lié organiquement.

4. Procédé selon la revendication 2 **caractérisé en ce que** le carbone est présent sous forme de graphite.

5. Procédé selon les revendications 1 à 4 **caractérisé en ce que** l'additif présente une taille de particules à plus de 90 % inférieure à 70 µm.

6. Procédé selon les revendications 1 à 5 **caractérisé en ce que** l'additif est mis en oeuvre en une quantité de 1 à 5 fois la quantité stoechiométrique en substances nocives acides dans les effluents gazeux.

7. Procédé selon les revendications 1 à 6 **caractérisé en ce que** l'additif dans l'étape a) est insufflé à l'aide d'une ou de plusieurs buses.

8. Procédé selon la revendication 7 **caractérisé en ce que** l'on utilise en tant que buses des buses à deux substances.

9. Procédé selon les revendications 1 à 8 **caractérisé en ce que** la température dans l'installation à l'étape a) est de 850 à 1 100 °C.

10. Procédé selon les revendications 1 à 9 **caractérisé en ce que** l'on additionne de façon dosée de l'eau ou de la vapeur d'eau aux effluents gazeux prépurifiés en une quantité telle que l'oxyde de calcium libre dans les effluents gazeux est transformé en hydroxyde de calcium.

11. Procédé selon les revendications 1 à 10 **caractérisé en ce que** la purification ultérieure correspondant à l'étape b) est réalisée à des températures de 100 à 200 °C.

12. Procédé selon les revendications 1 à 11 **caractérisé en ce que** l'étape b) est réalisée dans un réacteur comportant des éléments de mélange statiques ou mobiles.

13. Procédé selon les revendications 1 à 12 **caractérisé en ce que** les effluents gazeux sont de plus soumis à un dépoussiérage après la purification ultérieure correspondant à l'étape b).
